## Europäisches Patentamt
## European Patent Office
## Office européen des brevets

(19)

(11) Numéro de publication: **0 211 452**
**B1**

(12) # FASCICULE DE BREVET EUROPEEN

(45) Date de publication du fascicule du brevet:
**01.03.89**

(51) Int. Cl.⁴: **F16D 55/224**, F16D 65/16

(21) Numéro de dépôt: **86201102.0**

(22) Date de dépôt: **24.06.86**

(54) **Pince pour frein à disque.**

(30) Priorité: **01.07.85 IT 6760285**

(43) Date de publication de la demande:
**25.02.87 Bulletin 87/9**

(45) Mention de la délivrance du brevet:
**01.03.89 Bulletin 89/9**

(84) Etats contractants désignés:
**AT BE DE FR GB**

(56) Documents cités:
**DE-A- 2 834 100**
**FR-A- 1 539 504**
**FR-A- 1 548 334**
**FR-A- 2 074 226**
**FR-A- 2 186 101**
**FR-A- 2 496 805**

(73) Titulaire: **BENDIX ALTECNA S.p.A., Zona Industriale Casella Postale 27, I-70026 Modugno (Bari)(IT)**

(72) Inventeur: **Rivetti, Enrico, Via Garessio 6, I-10126 Torino(IT)**
Inventeur: **Zucca Pol, Bruno, Via Rua 24 Frazione Muriaglio, I-10081 Castellamonte Torino(IT)**

(74) Mandataire: **Patrito, Pier Franco, Dr. Ing., Cabinet PATRITO BREVETTI Via Don Minzoni 14, I-10121 Torino(IT)**

ACTORUM AG

## Description

La présente invention concerne une pince pour frein à disque, comprenant un étrier destiné à être monté en position fixe à cheval sur un disque tournant d'un frein et pourvu d'un organe de support et de guidage ayant une partie de guidage dont l'axe est perpendiculaire au plan du disque de frein et passe substantiellement par le centre de poussée des patins de freinage, un pont flottant supporté par ledit étrier de manière à pouvoir se déplacer perpendiculairement au plan du disque de frein, une partie dudit pont flottant constituant un cylindre hydraulique avec axe parallèle à la direction de mouvement du pont, un piston installé dans ledit cylindre et pourvu d'un poussoir coaxial accouplé à glissement à ladite partie de guidage de l'organe de support et de guidage, et deux patins de freinage disposés de sorte à agir sur les deux faces dudit disque de frein et opérativement reliés respectivement au poussoir dudit piston et à la partie du pont opposée audit cylindre.

Les pinces à pont flottant sont largement employées spécialement comme moyens de freinage dans les véhicules, et dans ces pinces le montage flottant du pont assure l'application d'une action de freinage symétrique sur le disque de frein malgré le progrès de l'usure des patins de freinage. Un problème présenté par ces pinces est constitué par le guidage du pont, dont on doit assurer la mobilité par rapport à l'étrier seulement dans la direction exactement perpendiculaire au plan du disque de frein. Dans les constructions plus répandues ce problème est résolu au moyen de deux organes de guidage insérés entre l'étrier et le pont prés des deux extrémités de ce dernier et pouvant être formés par des guides à dièdre ou par des colonnes de guidage. Dans tous les deux cas, dans l'usinage de l'étrier on doit respecter non seulement les tolérances d'usinage propres auxdites parties accouplées à glissement, mais aussi leur parallélisme exacte et la mesure exacte de leur écartement, tandis que dans l'usinage du pont on doit assurer les mêmes éléments et en plus aussi le parallélisme exacte entre les parties de guidage et l'axe du cylindre, et tout cela constitue un ensemble de conditions critiques qui comporte des coûts de travail relativement élevés. En outre, dans les constructions dans lesquelles lesdits organes de guidage sont laissés découverts, ils sont sujets à se salir et par conséquent à perdre leur capacité de glissement, tandis que dans les constructions dans lesquelles il sont protégés par des garnitures à soufflet on doit faire face à des coûts supplémentaires pour la fabrication et le montage de ces garnitures; les garnitures elles-mêmes se trouvent dans une position exposée et sont donc sujettes à se détériorer facilement à cause d'actions externes soit mécaniques, soit chimiques.

Le document DE-A 2 834 100 décrit une pince à pont flottant conforme au préambule de cette description. Le piston est guidé, au moyen de son poussoir, par rapport à l'organe de support et de guidage et par conséquent par rapport à l'étrier, tandis que le pont flottant est guidé par l'accouplement de son propre cylindre avec le piston. La partie de guidage, le poussoir, le piston et le cylindre hydraulique ont une section non circulaire pour stabiliser la position du pont par rapport à l'étrier en prévenant les rotations relatives autour de l'axe commun de toutes ces parties. L'usinage précis de ces parties non circulaires comporte des graves frais et, de plus, toute tendance à la rotation donne naissance à des résistances de frottement qui entrâvent le fonctionnement et produisent une usure rapide.

Le but de la présente invention est de rationaliser la construction des pinces pour freins à disques du type en question, de sorte à en rendre l'usinage exempt de conditions critiques et, par conséquent, plus simple et économique, ainsi qu'à obtenir un produit plus fiable approprié pour conserver longtemps ses caracatéristiques même dans les difficiles conditions d'ambiance dans lesquelles il est destiné à fonctionner.

Ce but est atteint dans une pince suivant le préambule, selon l'invention, par le fait que le cylindre hydraulique, le piston, le poussoir et la partie de guidage ont tous une section circulaire, et que la position du pont par rapport à l'étrier est stabilisée par des organes élastiques agissant entre lesdites deux parties.

Grâce à ces dispositions, aucune augmentation des frais d'usinage n'est rencontrée, on n'a pas à craindre des frottements anormals ni une usure rapide, et lesdits organes élastiques de stabilisation sont appelés à prévenir les rotations accidentelles du pont autour de l'axe commmun de la partie de guidage cylindrique de l'organe de support et de guidage, du poussoir, du piston et du cylindre, et à fonctionner comme des éléments anti-vibratoires. Par conséquent, les surfaces usineés dans un but de guidage et d'étanchéité sont reduites dans leur nombre et elles sont toutes cylindriques et coaxiales, permettant ainsi d'obtenir la plus grande précision par des usinages non critiques et au prix de revient minimum possible. De plus, ces surfaces peuvent être protégées contre le souillement au moyen de garnitures simples, au moins une partie desquelles devrait en tout cas être installée pour la protection du piston, et qui sont logées en des positions peu exposées, de sorte qu'elles ne sont pas sujettes à subir des détériorations par des agents externes mécaniques ou chimiques. Enfin, les organes élastiques destinés à stabiliser la position du pont peuvent être formés par des portions des organes élastiques qui en tout cas doivent être installés pour stabiliser la position des patins de freinage.

Ces caractéristiques et d'autres, et les avantages de l'objet de l'invention, ressortiront plus clairement de la suivante description de quelques formes de réalisation, données à titre d'exemples non limitatifs et représentées schématiquement dans les dessins annexés, dans lesquels:

Fig. 1 est une vue de face de la pince pour frein à disque selon l'invention;
Fig. 2 est une vue en plan suivant la flèche II de la figure 1, avec le pont partiellement enlevé afin de montrer les parties situées au dessous;

Fig. 3 en est une section faite suivant la ligne III–III de la figure 1; et

Fig. 4 est une section, analogue à celle de la figure 3, d'une forme de réalisation modifiée et d'une variante de cette dernière.

La pince comprend, comme d'habitude, un étrier, par exemple en fonte, dont la partie frontale 1 est pourvue d'oreilles 2 afin de pouvoir être fixée à une partie structurelle fixe (telle qu'un montant d'une suspension d'un véhicule); l'étrier est pourvu d'épaulements 3 reliant à la partie frontale 1 une partie postérieure 4, et l'installation est faite de telle façon qu'un disque de frein D se trouve disposé tournant entre la partie frontale 1 et la partie postérieure 4 de l'étrier. D'une façon connue, des appendices 7 de deux patins de freinage, respectivement 5 et 8, pourvus de garnitures de frottement respectivement 6 et 9, sont logées dans des sièges prévus à cet effet dans l'étrier 1–4, pour maintenir les patins de freinage dans une position correcte par rapport au disque D sur lequel ils doivent agir pour donner lieu au freinage. De plus, pendant le freinage les patins de freinage déchargent les forces en jeu directement sur lesdits sièges de l'étrier et, par conséquent, sur la partie du véhicule à laquelle l'étrier est relié, sans solliciter d'aucune façon les autres composants de la pince. Les jeux d'accouplement de ces patins sont rattrapés par des petits ressorts 10 appliqués à l'étrier, afin d'éviter le bruit pendant la marche.

Le pont 12 de la pince s'étend, comme d'habitude, pour former frontalement un cylindre 13 et, postérieurement, deux becs 15 auxquels est relié le patin de freinage 8. Le cylindre 13 peut être alimenté en huile sous pression à travers un raccord 14, et dans son intérieur est logé de façon étanche un piston 16. Comme déjà dit auparavant, dans les constructions connues le pont 12 de la pince est guidé près de ses extrémités latérales par rapport à l'étrier, et le piston 16 est opérativement relié directement au patin de freinage 5.

En application de l'invention, l'étrier 1 porte frontalement un organe de support et de guidage 17 qui, dans l'exemple particulier représenté, est appliqué sur l'étrier au moyen de vis 19. L'organe de support et de guidage 17 présente sur sa ligne médiane une portion 18 formant une partie cylindrique de guidage dont l'axe est dirigé perpendiculairement au plan du disque de frein D et passe au moins approximativement par le centre de poussée des patins de freinage 5 et 8. Dans la forme de réalisation représentée, la portion 18 présente un alésage dans lequel est accouplé un poussoir 20 dont l'extrémité interne est opérativement reliée au patin de freinage 5, tandis que son extrémité externe est reliée, par exemple calée, au piston 16.

De ce fait, le poussoir 20 et le piston 16 solidaire de ce dernier sont guidés par la portion de guidage 18 qui est solidaire de l'étrier 1–4, et sont obligés de se déplacer dans une direction perpendiculaire au plan du disque de frein D et de demeurer en correspondance du centre de poussée du patin de freinage 5. Par conséquent, ils sont à même de coopérer de la façon la plus correcte avec le patin de freinage 5. A son tour, le pont 12–15 est guidé, lui-aussi, par l'accouplement du cylindre 13 avec le piston 16, de sorte à se déplacer dans une direction perpendiculaire au plan du disque de frein D, et de ce fait il coopère correctement lui-aussi, par ses becs postérieurs 15, avec le patin de freinage 8.

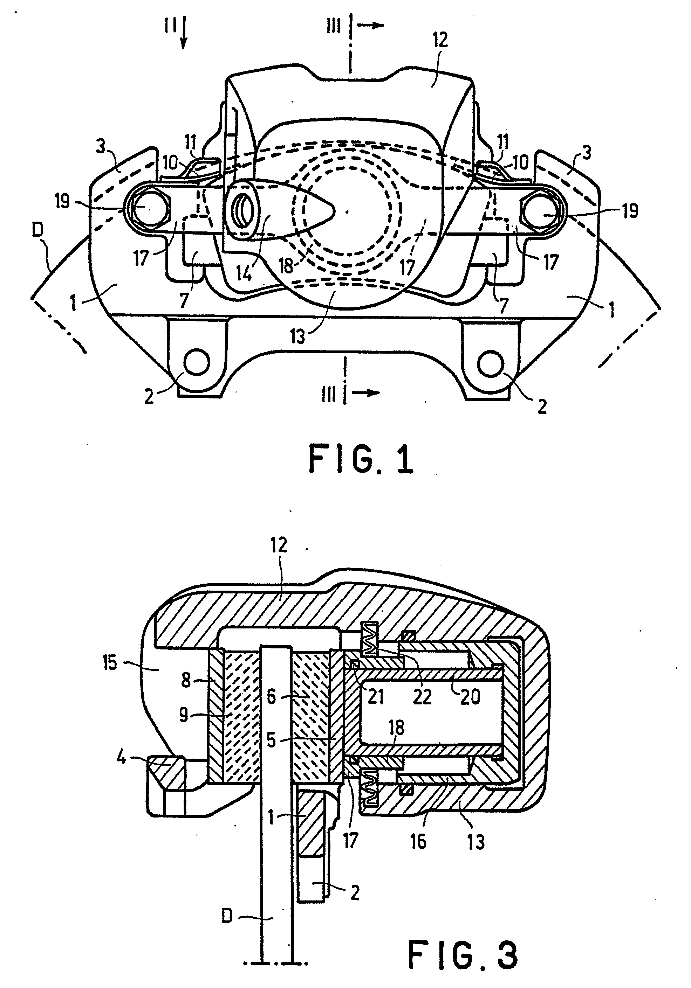

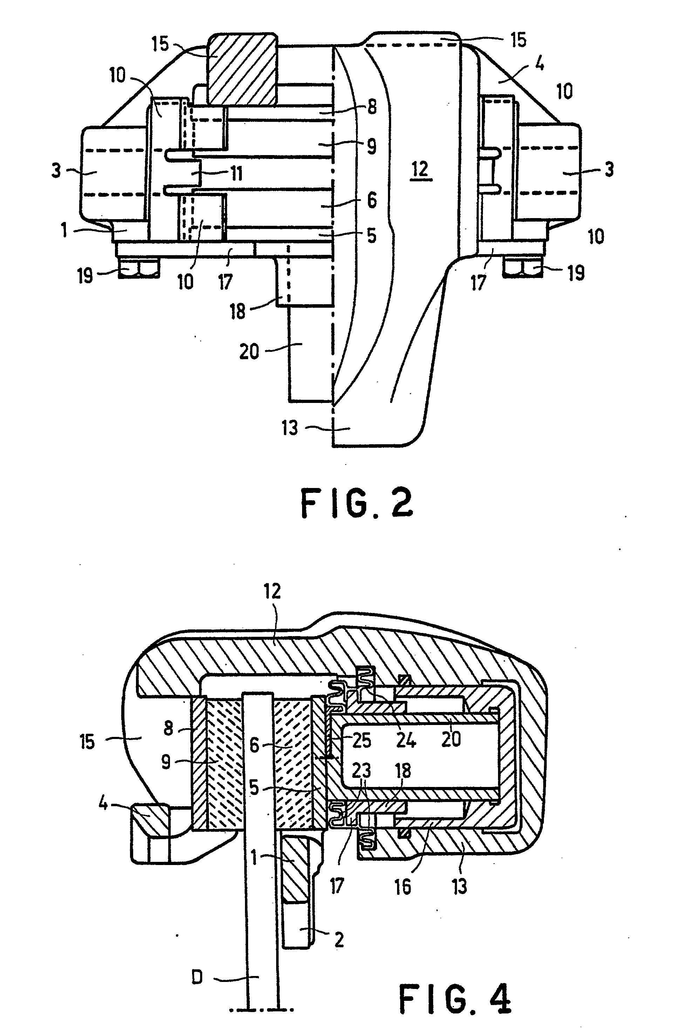

Cependant, le pont 12 pourrait pivoter accidentellement autour de l'axe commun de la partie de guidage cylindrique de la portion de guidage 18, du poussoir 20, du piston 16 et du cylindre 13; aucune force opérative ne l'oblige à effectuer une telle rotation, qui cependant peut être produite par les sécouements du véhicule sur lequel est montée la pince. Pour stabiliser le pont 12 afin d'éviter de tels déplacements accidentels on a prévu deux simples ressorts à languette 11, agissant entre l'étrier 1–4 et le pont 12. Comme représenté dans les figures 1 et 2, ces ressorts à languette peuvent être formés par deux appendices des mêmes ressorts 10 qui stabilisent les patins de freinage 5 et 8.

Le fonctionnement de la pince selon l'invention est tout à fait analogue au fonctionnement des pinces connues: l'alimentation d'huile sous pression au raccord 14 et, par conséquent, à l'ensemble cylindre 13 – piston 16, provoque une poussée du piston 16 (vers la gauche selon la figure 3) et, par conséquent, l'application d'une pression de freinage au patin de freinage 5 à travers le poussoir 20, et en même temps une poussée du cylindre 13 (vers la droite, toujours selon la figure 3) et, par conséquent, l'application d'une pression de freinage au patin de freinage 8 à travers les becs postérieurs 15 du pont 12, avec une action de freinage qui reste symétrique malgré le progrès de l'usure des garnitures de frottement 6 et 9.

Dans le but d'une bonne conservation des parties et de leur capacité de glissement, les accouplements entre le poussoir 20 et la partie de guidage cylindrique de la portion de guidage 18 de l'organe de support et de guidage 17, et entre le piston 16 et le cylindre 13, doivent être protégés contre le souillement. Cela peut être obtenu de la façon la plus simple au moyen d'une bague pare-poussière 21 montée dans l'organe de support et de guidage 17, et d'une garniture à soufflet 22 insérée entre la portion de guidage 18 et le cylindre 13, comme représenté dans la figure 3. Contrairement aux garnitures à soufflet des parties de guidage des pinces connues, ces parties se trouvent dans une position protégée et elles ne peuvent pas être facilement endommagées par des agents extérieurs mécaniques ou chimiques.

Dans une forme de réalisation modifiée illustrée dans la partie inférieure de la figure 4, la bague pare-poussière 21 et la garniture à soufflet 22 peuvent être remplacées par une seule garniture à coiffe 23 de configuration plus complexe, logée sur l'organe de support et de guidage 17 et coopérant intérieurement avec le poussoir 20 et extérieurement avec le cylindre 13. Pour éviter les bruits et la transmission de chaleur vers le corps du cylindre, la garniture à coiffe 24, selon la variante représentée dans la partie supérieure de la même figure 4, peut être pourvue d'un disque métallique 25 inséré entre le patin de freinage 5 et le poussoir 20.

Comme on peut le comprendre, la construction de la pince selon l'invention est substantiellement simplifiée et rationalisée par rapport aux pinces connues, tout en gardant leurs avantages et en éliminant les inconvénients mentionnés. Bien entendu, les parties décrites et représentées peuvent subir des différentes modifications pour des exigences économiques, technologiques, d'encombrement, de simplification et d'application sur des véhicules ayant des caractéristiques différentes. Soit l'étrier que le pont peuvent subir des modifications géométriques et structurelles; en particulier, ledit organe de support et de guidage peut être réalisé d'une seule pièce avec l'étrier au lieu d'être appliqué sur ce dernier. Les sièges pour les patins de freinage peuvent être disposés dans des positions différentes de celles indiquées, et l'on peut prévoir que l'insertion des patins ait lieu soit axialement, soit radialement. Pour les applications qui ne sont pas sujettes à de charges importantes, les sièges pour les patins de freinage pourraient être disposés d'un côté (là où se déchargent les forces de freinage pendant le marche en avant) sur l'étrier, et de l'autre côté (là où se déchargent les forces de freinage pendant la marche en arrière) sur une partie du pont, en déchargeant alors ces dernières forces, qui du reste sont moins élevées que les premières, à travers les accouplements entre le cylindre, le piston, le poussoir et la partie cylindrique de guidage solidaire à l'étrier; cela permet de simplifier et alléger la structure de l'étrier. Le poussoir 20 a été représenté comme un élément séparé du piston 16, ce qui dans plusieurs cas est constructivement avantageux, mais il pourrait aussi être réalisé d'une seule pièce avec ce dernier, et aussi bien il pourrait être formé par une extrémité du piston même, conformée d'une façon appropriée pour ne pas interférer avec l'organe de support et de guidage. En outre, la partie cylindrique de guidage présentée par l'organe de support et de guidage pour l'accouplement du poussoir ou du piston pourrait être externe (surface cylindrique d'enveloppe) au lieu qu'interne (trou cylindrique).

Bien entendu, les caractéristiques de l'invention peuvent être également appliquées aux pinces pour frein pourvues d'un dispositif de freinage à main, à celles pourvues d'un dispositif incorporé pour le rattrapage du jeu, et à celles ayant tous les deux dispositifs mentionnés.

## Revendications

1. Pince pour frein à disque, comprenant un étrier (1–4) destiné à être monté en position fixe à cheval sur un disque tournant (D) d'un frein et pourvu d'un organe de support et de guidage (17) ayant une partie de guidage (18) dont l'axe est perpendiculaire au plan du disque de frein (D) et passe substantiellement par le centre de poussée des patins de freinage (5, 8), un pont flottant (12) supporté par ledit étrier de manière à pouvoir se déplacer perpendiculairement au plan du disque de frein, une partie dudit pont flottant constituant un cylindre hydraulique (13) avec axe parallèle à la direction de mouvement du pont (12), un piston (16) installé dans ledit cylindre et pourvu d'un poussoir (20) coaxial accouplé à glissement à ladite partie de guidage (18) de l'organe de support et de guidage (17), et deux patins de freinage (5, 8) disposés de sorte à agir sur les deux faces dudit disque de frein et opérativement reliés respectivement au poussoir (20) dudit piston (16) et à la partie du pont (12) opposée audit cylindre (13), caractérisée en ce que le cylindre hydraulique (13), le piston (16), le poussoir (20) et la partie de guidage (18) ont tous une section circulaire, et que la position du pont (12) par rapport à l'étrier (1–4) est stabilisée par des organes élastiques (11) agissant entre lesdites deux parties (12, 1–4).

2. Pince pour frein a disque selon la revendication 1, caractérisée en ce que ledit organe de support et de guidage (17) constitue un élément réalisé structurellement séparé de l'étrier (1–4) et appliqué successivement sur ce dernier.

3. Pince pour frein à disque selon la revendication 1, caractérisé en ce que ledit organe de support et de guidage (17) constitue un élément réalisé structurellement d'une seule pièce avec l'étrier (1–4).

4. Pince pour frein a disque selon la revendication 1, caractérisée en ce que ledit poussoir (20) constitue un élément réalisé structurellement séparé du piston (16) et successivement accouplé a ce dernier.

5. Pince pour frein à disque selon la revendication 1, caractérisée en ce que ledit poussoir (20) constitue un élément réalisé structurellement d'une seule pièce avec le piston (16).

6. Pince pour frein a disque selon la revendication 1, caractérisée en ce que lesdits organes élastiques (11) agissant entre l'étrier (1–4) et le pont (12) sont des ressorts à languette.

7. Pince pour frein à disque selon la revendication 6, caractérisée en ce que lesdits ressorts à languette (11) sont constitués par des portions des petits ressorts (10) appliqués à l'étrier (1–4) afin de stabiliser la position des patins de freinage (5, 8).

8. Pince pour frein à disque selon la revendication 1, caractérisée en ce qu'elle comprend une garniture à soufflet (22) montée entre ledit organe de support et de guidage (17) et le cylindre (13).

9. Pince pour frein à disque selon la revendication 1, caractérisée en ce qu'elle comprend une garniture a coiffe (23, 24) montée entre ledit organe de support et de guidage (17) et le cylindre (13) et entre ledit organe de support et de guidage (17) et le poussoir (20).

10. Pince pour frein à disque selon la revendication 9, caractérisée en ce que ladite garniture à coiffe (24) est pourvue d'un disque métallique (25) inséré entre ledit poussoir (20) et un patin de freinage (5).

## Patentansprüche

1. Scheibenbremssattel mit einem Bügel (1–4), der dazu bestimmt ist, rittlings auf einer drehbaren Bremsscheibe (D) in fester Stellung angeordnet zu werden und mit einem tragenden Führungselement (17) versehen ist, das einen Führungsteil (18) aufweist, dessen Achse rechtwinklig zur Bremsscheibe (D) und im wesentlichen durch die Druckmitte der Bremsschuhe (5, 8) verläuft, mit einer im Bügel gelagerten schwimmenden Brücke (12), die sich rechtwinklig zur Ebene der Bremsscheibe bewegen kann, wobei ein Teil dieser schwimmenden Brücke einen Hydraulikzylinder (13) mit parallel zur Bewegungsrichtung der Brücke (12) verlaufender Achse bildet, mit einem sich im Zylinder befindenden Kolben (16), der mit einem koaxialen, mit dem Führungsteil (18) des tragenden Führungselements (17) gleitend verbundenen Stössel (20) versehen ist, und mit zwei Bremsschuhen (5, 8), die so angeordnet sind, dass sie auf die beiden Flächen der Bremsscheibe wirken und jeweils mit dem Stössel (20) des Kolbens (16) und mit der dem Zylinder (13) gegenüberliegenden Seite der Brücke in Werkverbindung stehen, dadurch gekennzeichnet, dass der Hydraulikzylinder (13), der Kolben (16), der Stössel (20) und der Führungsteil (18) alle einen kreisförmigen Querschnitt haben und dass die Lage der Brücke (12) gegenüber dem Bügel (1–4) durch elastische Elemente (11) ausgeglichen wird, die zwischen diesen beiden Teilen (12, 1–4) wirken.

2. Scheibenbremssattel nach Anspruch 1, dadurch gekennzeichnet, dass das tragende Führungselement (17) ein vom Bügel (1–4) getrenntes Bauelement ist, das nachträglich daran befestigt wird.

3. Scheibenbremssattel nach Anspruch 1, dadurch gekennzeichnet, dass das tragende Führungselement (17) ein einteilig mit dem Bügel (1–4) verbundener Bestandteil desselben ist.

4. Scheibenbremssattel nach Anspruch 1, dadurch gekennzeichnet, dass der Stössel (20) ein vom Kolben (16) getrenntes Bauelement ist, das nachträglich daran befestigt wird.

5. Scheibenbremssattel nach Anspruch 1, dadurch gekennzeichnet, dass der Stössel (20) ein einteilig mit dem Kolben (16) verbundener Bestandteil desselben ist.

6. Scheibenbremssattel nach Anspruch 1, dadurch gekennzeichnet, dass die zwischen dem Bügel (1–4) und der Brücke (12) wirkenden elastischen Elemente (11) Federkeile sind.

7. Scheibenbremssattel nach Anspruch 6, dadurch gekennzeichnet, dass die Federkeile (11) aus Teile der Klammern (10) bestehen, die am Bügel (1–4) angebracht sind, um die Lage der Bremsschuhe (5, 8) auszugleichen.

8. Scheibenbremssattel nach Anspruch 1, dadurch gekennzeichnet, dass dieselbe eine Balgdichtung (22) umfasst, die zwischen dem tragenden Führungselement (17) und dem Zylinder (13) eingebaut ist.

9. Scheibenbremssattel nach Anspruch 1, dadurch gekennzeichnet, dass dieselbe eine Haubendichtung (23, 24) umfasst, die zwischen dem tragenden Führungselement (17) und dem Zylinder (13) sowie zwischen dem tragenden Führungselement (17) und dem Stössel (20) angeordnet ist.

10. Scheibenbremssattel nach Anspruch 9, dadurch gekennzeichnet, dass die Haubendichtung (24) eine Metallscheibe (25) aufweist, die zwischen dem Stössel (20) und einem Bremsschuh (5) angeordnet ist.

## Claims

1. A disk brake caliper, of the type comprising a bracket (1–4) intended to be mounted in a fixed position astride a rotatable disk (D) of a brake and provided with a supporting and guiding member (17) having a guide portion (18) whose axis is perpendicular to the plane of the brake disk (D) and passes substantially through the thrust center of the braking pads (5, 8), a floating bridge (12) supported by said bracket in such a manner as to be allowed to move perpendicularly to the plane of said brake disk, a portion of said floating bridge forming a hydraulic cylinder (13) having its axis parallel to the direction of movement of the bridge (12), a piston (16) installed within said cylinder and provided with a coaxial pusher (20) coupled in a slidable manner to said cylindrical guide portion (18) of the support and guide member (17), and two braking pads (5, 8) arranged to act on the two faces of said brake disk and operatively connected to the pusher (20) of piston (16) and the portion of bridge (12) opposite said cylinder (13), respectively, characterized in that the hydraulic cylinder (13), the piston (16), the pusher (20) and the guide portion (18) all have circular cross-section, and that the position of the bridge (12) relative to the bracket (1–4) is stabilized by elastic means (11) acting between said two parts (12, 1–4).

2. A disk brake caliper according to Claim 1, characterized in that said support and guide member (17) is an element structurally separate from the bracket (1–4) and successively applied thereto.

3. A disk brake caliper according to Claim 1, characterized in that said support and guide member (17) is an element structurally integral with the bracket (1–4).

4. A disk brake caliper according to Claim 1, characterized in that said pusher (20) is an element structurally separate from the piston (16) and successively coupled thereto.

5. A disk brake caliper according to Claim 1, characterized in that said pusher (20) is an element structurally integral with the piston (16).

6. A disk brake caliper according to Claim 1, characterized in that said elastic members (11) acting between the bracket and the bridge are tab-shaped springs.

7. A disk brake caliper according to Claim 6, characterized in that said tab-shaped springs (11) are portions of the springs (10) applied onto the bracket (1–4) to stabilize the position of the braking pads (5, 8).

8. A disk brake caliper according to Claim 1, characterized in comprising a bellows-shaped gasket (22) mounted between said support and guide member (17) and the cylinder (13).

9. A disk brake caliper according to Claim 1, characterized in comprising a cap-shaped gasket (23, 24) mounted between said support and guide member (17) and the cylinder (13) and between said support and guide member (17) and the pusher (20).

10. A disk brake caliper according to Claim 9, characterized in that said cap-shaped gasket (24) is provided with a metal disk (25) inserted between said pusher (20) and a braking pad (5).

FIG. 1

FIG. 3

EP 0 211 452 B1

FIG. 2

FIG. 4